# EUROPEAN PATENT APPLICATION

(11) **EP 2 779 728 A1**
(43) Date of publication of application: **17.09.2014**
(21) Application number: 13778810.5
(22) Date of filing: 09.04.2013
(51) Int. Cl.: H04W 16/14

(54) **DYNAMIC SPECTRUM SHARING METHOD AND DEVICE**

(30) Priority: 20.04.2012 CN 201210118160
(71) Applicant: Huawei Technologies Co., Ltd, Shenzhen, Guangdong 518129 (CN)
(72) Inventor: XIAO, Dengkun, Shenzhen Guangdong 518129 (CN); HAN, Jing, Shenzhen Guangdong 518129 (CN); LI, Anjian, Shenzhen Guangdong 518129 (CN)
(74) Representative: Isarpatent
(86) International application number: PCT/CN2013/073916
(87) International publication number: WO 2013/155941

(57) **Abstract**

The present invention provides a dynamic spectrum sharing method and device. The method comprises: a base station determining first spectrum utilization information of a covered cell, the first spectrum utilization information comprising one or any number of combinations of the following information: an access failure rate of the covered cell, calling strength of the covered cell, an expected bandwidth of the covered cell, an idle bandwidth of the covered cell, bandwidth configuration information of the covered cell and edge user equipment information of the covered cell; and the base station sending the first spectrum utilization information to a neighboring base station when dynamic spectrum sharing is performed in homogeneous systems with the same Radio Access Technology; or the base station sending the first spectrum utilization information to a core network when dynamic spectrum sharing is performed in heterogeneous systems with different Radio Access Technologies; or the base station sending the first spectrum utilization information to a radio resource management server. The present invention achieves the object of spectrum resource sharing, and improves the utilization rate of spectrum resource.

## Description

This application claims priority to Chinese patent application No. 201210118160.7 titled "DYNAMIC SPECTRUM SHARING METHOD AND DEVICE" and filed with the State Intellectual Property Office on April 20, 2012, which is incorporated herein by reference in its entirety.

### FIELD OF THE TECHNOLOGY

The present invention relates to the field of communication technology, and in particular to a dynamic spectrum sharing method and device.

### BACKGROUND

Radio spectrum is resources with economic and social value. In a broadband wireless communication system, a spectrum resource is precious and rare. How to utilize efficiently the spectrum resource is a hot research subject at present. When eNBs in the network have unbalanced business loads, an utilization rate of spectrum may be improved by means of the spectrum sharing technology. When radio access technologies (Radio Access Technologies, RATs) in the network have unbalanced business loads, the utilization rate of spectrum may also be improved by means of the spectrum sharing technology.

In an existing technology, messages, mainly such as "RESOURCE STATUS REQUEST (resource status request)", "RESOURCE STATUS UPDATE (resource status update)" and "LOAD INFORMATION (load information)" are adapted to indicate a load state of a network with the base station. The RESOURCE STATUS REQUEST message and the RESOURCE STATUS UPDATE message inform the load state in the network with the base station by means of the following IEs: Radio Resource Status IE which indicates the usage of PRBs in downlink and uplink (indicates the usage of the PRBs in downlink and uplink); S1 TNL Load Indicator IE which indicates the status of the S1 transport network load experienced by the cell (indicates the status of the S1 transport network load experienced by the cell); Hardware Load Indicator IE which indicates the status of the S1 transport network load experienced by the cell (indicates the status of the S1 transport network load experienced by the cell); and Composite Available Capacity Group IE which indicates the overall available resource level in the cell in downlink and uplink (indicates the overall available resource level in the cell in downlink and uplink). The message of "LOAD INFORMATION" informs the load state in the network with the base station by means of the following IEs: OI (overload indication) sent by the interfered cell, which indicates the interference level of the interfered cell, and will be considered by the eNB of the receiver when the scheduling policy is set; HII (High Interference Information, high interference information), i.e., the eNB for receiving the interference level of a sending eNB should try to avoid scheduling an edge user on the PRB of a neighboring interfering cell; and RNTP (Relative Narrowband Tx Power, relative narrowband tx power) which indicates whether downlink transmitting power is lower than a threshold value. The eNB for receiving the messages should consider the message when setting the scheduling policy.

However, the messages sent by the base station to a neighboring base station or a core network only partly reflect the load state in the network with the base station. It is not sufficient to make a reasonable and effective spectrum resource sharing determination by the neighboring base station or the core network. Therefore, there may be a phenomenon that the spectrum resources are scarce in parts of base stations and vacant in other parts of base stations, and thus the utilization rate of spectrum is lower.

### SUMMARY

Embodiments of the present invention provide a dynamic spectrum sharing method and device to solve the defect that the utilization rate of spectrum is lower in the existing technology.

In one aspect, an embodiment of the present invention provides a dynamic spectrum sharing method, including:
determining, by a base station, first spectrum utilization information of a covered cell, where the first spectrum utilization information includes any one or combinations of an access failure rate of the covered cell, a calling intensity of the covered cell, an expected bandwidth of the covered cell, a vacating bandwidth of the covered cell, bandwidth configuration information of the covered cell and information of an edge user equipment of the covered cell; the bandwidth configuration information of the covered cell includes a bandwidth and a carrier wave of the covered cell, and the information of the edge user equipment of the covered cell includes a downlink transmitting power of the base station and a physical resource block occupied by the edge user equipment of the covered cell; and
sending, by the base station, the first spectrum utilization information to a neighboring base station in the case where a dynamic spectrum sharing is performed on a homogeneous system with the same Radio Access Technology; or sending, by the base station, the first spectrum utilization information to a core network in the case where a dynamic spectrum sharing is performed on heterogeneous systems with different Radio Access Technologies.

In another aspect, an embodiment of the present invention provides a dynamic spectrum sharing device, including:
a determination module adapted to determine first spectrum utilization information of a covered cell, where the first spectrum utilization information includes any one or combinations of an access failure rate of the covered cell, a calling intensity of the covered cell, an expected bandwidth of the covered cell, a vacating bandwidth of the covered cell, bandwidth configuration information of the covered cell and information of an edge user equipment of the covered cell; the bandwidth configuration information of the covered cell includes a bandwidth and a carrier wave of the covered cell, the information of the edge user equipment of the covered cell includes a downlink transmitting power of the base station and a physical resource block occupied by the edge user equipment of the covered cell; and
a sending module adapted to send the first spectrum utilization information to a neighboring base station in the case where a dynamic spectrum sharing is performed on a homogeneous system with the same Radio Access Technology; send the first spectrum utilization information to a core network in the case where a dynamic spectrum sharing is performed on a heterogeneous system with different Radio Access Technologies; or send the first spectrum utilization information to a radio resource management server.

In the dynamic spectrum sharing method and device according to embodiments of the present invention, the first spectrum utilization information, which is sent by the base station to the neighboring base station or the core network or the RRM server, includes any one or combinations of the following information: an access failure rate of the covered cell, a calling intensity of the covered cell, an expected bandwidth of the covered cell, a vacating bandwidth of the covered cell, a bandwidth configuration information of the covered cell and information of an edge user equipment of the covered cell. The neighboring base station or the core network or the Radio Resource Management server may determine whether the spectrum resource is scarce or vacant in the base station according to the first spectrum utilization information. Thus, the vacating bandwidth of the network with the base station or the vacating bandwidth of the other base stations may be allocated to this base station or the vacating bandwidth of this base station may be allocated to the other base stations. Therefore, the object of spectrum resource sharing is implemented and the utilization rate of spectrum resource is improved.

### BRIEF DESCRIPTION OF THE DRAWINGS

Figure 1 is a flowchart of a dynamic spectrum sharing method without an added spectrum sharing processing network element according to an embodiment of the present invention;
Figure 2 is a flowchart of a dynamic spectrum sharing method under a scene of intra-LTE without an added spectrum sharing processing network element according to an embodiment of the present invention;
Figure 3 is a flowchart of a dynamic spectrum sharing method under a scene of inter-RAT without an added spectrum sharing processing network element according to an embodiment of the present invention;
Figure 4 is a flowchart of another dynamic spectrum sharing method under a scene of inter-RAT without an added spectrum sharing processing network element according to an embodiment of the present invention;
Figure 5A is a flowchart of a dynamic spectrum sharing method under a scene of intra-LTE with an added spectrum sharing processing network element according to an embodiment of the present invention;
Figure 5B is the application scene diagram for Figure 5A;
Figure 6A is a flowchart of a dynamic spectrum sharing method under a scene of inter-RAT with an added spectrum sharing processing network element according to an embodiment of the present invention;
Figure 6B is the application scene diagram for Figure 6A;
Figure 7A is a schematic structural diagram of a dynamic spectrum sharing device according to an embodiment of the present invention;
Figure 7B is a schematic structural diagram of another dynamic spectrum sharing device according to an embodiment of the present invention; and
Figure 7C is a schematic structural diagram of still another dynamic spectrum sharing device according to an embodiment of the present invention.

### DETAILED DESCRIPTION OF THE EMBODIMENTS

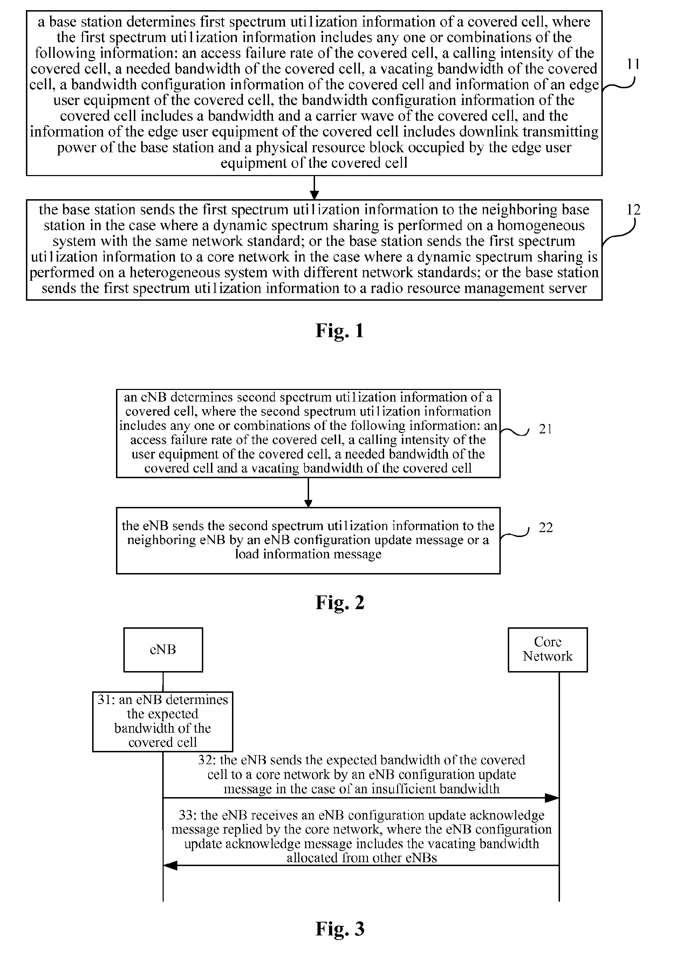

Figure 1 is a flowchart of a dynamic spectrum sharing method without an added spectrum sharing processing network element according to an embodiment of the present invention. In this embodiment, a base station may be an eNB in long term evaluation (Long Term Evaluation, LTE) network, a base transceiver station (Base Transceiver Station, BTS) in 2G network, an NB in 3G network, or an access network element in more advanced 4G network. As shown in Figure 1, the embodiment includes steps S11 to S12.

Step S11: a base station determines first spectrum utilization information of a covered cell, where the first spectrum utilization information includes any one or combinations of the following information: an access failure rate of the covered cell, a calling intensity of the covered cell, an expected bandwidth of the covered cell, a vacating bandwidth of the covered cell, a bandwidth configuration information of the covered cell and information of an edge user equipment of the covered cell, the bandwidth configuration information of the covered cell includes a bandwidth and a carrier wave of the covered cell, and the information of the edge user equipment of the covered cell includes downlink transmitting power of the base station and a physical resource block occupied by the edge user equipment of the covered cell.

The base station may periodically determine the first spectrum utilization information of the covered cell. The base station may only determine the first spectrum utilization information including the access failure rate of the covered cell, the calling intensity of the covered cell, the expected bandwidth of the covered cell, the vacating bandwidth of the covered cell, the bandwidth configuration information of the covered cell or the information of the edge user equipment of the covered cell. The base station may also determine the first spectrum utilization information including any combinations of the above information.

The access failure rate of the cell is a ratio of the number of failure accesses to the total number of accesses, and the total number of accesses is the sum of the number of failure accesses and the number of successful accesses. The calling intensity of the user equipment in the cell is the number of times that calling is received per second. The higher the admission failure rate (Admission failure rate) of the cell, the heavier the spectrum load of the cell. The larger the calling intensity (calling intensity) of the user equipment in the cell, the more the terminals accessing the cell, and the heavier the spectrum load of the cell. The expected bandwidth (Needed bandwidth) of the cell may be a width of the expected bandwidth, may also be an expected bandwidth range. The vacating bandwidth (vacating bandwidth) of the cell may be a vacating bandwidth range.

The information of the edge user equipment of the covered cell includes downlink transmitting power of the base station and the physical resource block occupied by the edge user equipment of the covered cell. The interference to a neighboring base station may be determined by the downlink transmitting power of the base station.

Step S12: the base station sends the first spectrum utilization information to the neighboring base station in the case where a dynamic spectrum sharing is performed on a homogeneous system with the same Radio Access Technology; or the base station sends the first spectrum utilization information to a core network in the case where a dynamic spectrum sharing is performed on a heterogeneous system with different Radio Access Technologies; or the base station sends the first spectrum utilization information to a radio resource management server.

The base station may periodically send the first spectrum utilization information, and may also send the first spectrum utilization information when one or more information in the first spectrum utilization information is changed.

In the case where dynamic spectrum sharing is performed on homogeneous systems with the same radio access technology, such as on the LTE network, on the 2G network or on the 3G network, the base station sends the first spectrum utilization information to the neighboring base station. In the cases where the access failure rate of the covered cell is high, the calling intensity of the user equipment is high, there is an expected bandwidth or there is no vacating bandwidth, it may be determined that the resource is scarce or the load is heavy in the base station. The neighboring base station determines that the spectrum resource of the base station for sending the first spectrum utilization information is scarce, according to the first spectrum utilization information. In this case, the neighboring base station allocates the vacating bandwidth thereof to the base station for sending the first spectrum utilization information, when the neighboring base station has the vacating spectrum resource at this time. The base station for sending the first spectrum utilization information may receive the available bandwidth sent by the neighboring base station, and then may allocate the received available bandwidth. If the neighboring base station has not vacating spectrum resource at this time, the base station for sending the first spectrum utilization information may receive from the neighboring base station an inform message that there is no vacating spectrum resource.

The heterogeneous system with different Radio Access Technologies may be a heterogeneous system that the LTE network coexists with the 3G network, a heterogeneous system that the LTE network coexists with the 2G network, a heterogeneous system that the 2G network coexists with the 3G network, or a heterogeneous system that the more advanced 4G network coexists with other network. When the dynamic spectrum sharing is performed on the heterogeneous systems with different Radio Access Technologies, for example, in the heterogeneous system that the 2G network coexists with the 3G network, the base station sends the first spectrum utilization information to the core network by an equipment at the network side, for example a base station controller (Base Station Controller, BSC) in the 2G network or a radio network controller (Radio Network Controller, RNC) in the 3G network. The core network performs the spectrum sharing function. Alternatively, the core network sends the first spectrum utilization information to a peer network. The peer network performs the spectrum sharing function. As an example, the core network or the peer network determines that the resource is scarce or the load is heavier in the base station for sending the first spectrum utilization information, according to the first spectrum utilization information. The core network or the peer network determines a base station with a vacating bandwidth, according to the collected first spectrum utilization information of other base stations. Then, the core network or the peer network allocates the vacating bandwidth of other base stations to the base station with the scarce resource. The base station with the scarce resource may receive from the core network the vacating bandwidth which is allocated from the base station with the vacating bandwidth. As another example, the core network or the peer network determines that more physical resource blocks (PRBs) are occupied by an edge user equipment of a base station. In this case, the edge user equipment may be allocated to other base stations which occupy less PRBs, and the vacating bandwidth of the base stations which occupies less PRBs is allocated to the base stations which occupy more PRBs. As another example, in the case of the high access failure rate of the Macro cell, the core network or the peer network determines that the Macro cell has a heavy load. In this case, the edge user equipment may be allocated to other base stations which occupy less PRBs, and the vacating bandwidth of the base station which occupies less PRBs, is allocated to the Macro cell.

When a spectrum sharing processing network element such as a radio resource management server (Radio Resource Management Server, RRM Server) is added, regardless that dynamic spectrum sharing is performed in homogeneous systems with the same Radio Access Technology or in heterogeneous systems with different Radio Access Technologies, the base station may periodically send the first spectrum utilization information to the RRM server via an added Xn interface with the RRM server. The Xn interface is an interface defined due to the introduction of the RRM server, the name of which is alterable. The first spectrum utilization information may be sent to the RRM server when one or more information in the first spectrum utilization information is changed.

The base station may send to the RRM server the first spectrum utilization information only including the access failure rate of the covered cell, the calling intensity of the covered cell, the expected bandwidth of the covered cell, the vacating bandwidth of the covered cell, the bandwidth configuration information of the covered cell and the information of edge user equipment of the covered cell. The base station may also send to the RRM server the first spectrum utilization information including any combinations of the above information. For example, an eNB may send to the RRM server an eNB configuration message via the added Xn interface, where the eNB configuration message includes the configured bandwidth (Configured bandwidth) and carrier (carrier) of the eNB. For example, the eNB may send to the RRM server an edge user distribution message via the added Xn interface, where the edge user distribution message includes the downlink transmitting power of the eNB and a physical resource block occupied by the edge user equipment of the covered cell of the eNB. For example, the eNB may send to the RRM server the access failure rate and the calling intensity of the covered cell carried on a load information message, via the added Xn interface.

In the cases where the access failure rate of the covered cell is high, the calling intensity of the user equipment is high or there is an expected bandwidth or there is no vacating bandwidth in the base station, it may be determined that the resource of the base station is scarce or the base station has a heavy load. The RRM server determines whether the spectrum sharing needs to be performed by collecting first spectrum utilization information of each base station and analyzing the resource and the load of each base station. Then, the resource is coordinated between base stations according to the analyzed result. As an example, the RRM server determines that the base station for sending the first spectrum utilization information has a scarce resource or a heavy load, the RRM server determines the base station having the vacating bandwidth according to the collected first spectrum utilization information of each base station, and allocates the vacating bandwidth of the base station having the vacating bandwidth to the base station in which the resource is scarce. The base station, in which the resource is scarce, may receive the available bandwidth sent by the RRM server. As another example, in the case where the RRM server determines that more physical resource blocks (PRBs) are occupied by an edge user equipment of a base station, the RRM server may allocate the edge user equipment to other base stations which occupy less PRBs; and allocate the vacating bandwidth of the base station which occupies less PRBs, to the base stations which occupies more PRBs. As another example, in the case where the access failure rate of the Macro cell is high, the RRM server determines that the Macro cell has a heavy load, allocates the edge user equipment to other base stations which occupy less PRBs, and allocate the vacating bandwidth of the base station which occupies less PRBs to the Macro cell.

In the dynamic spectrum sharing method according to the embodiment, the base station sends the first spectrum utilization information to the neighboring base station, the core network or the RRM server. The first spectrum utilization information includes any one or combination of the following information: the access failure rate of the covered cell, the calling intensity of the covered cell, the expected bandwidth of the covered cell, the vacating bandwidth of the covered cell, the bandwidth configuration information of the covered cell and the information of the edge user equipment of the covered cell. The neighboring base station, the core network or the RRM server may determine whether the spectrum resource of the base station is scarce or vacant according to the first spectrum utilization information. Thus, the vacating bandwidth of the local base station or other base stations may be allocated to the base station; or the vacating bandwidth of the base station may be allocated to the other base stations. Therefore, the spectrum resource sharing is implemented and the utilization rate of spectrum resource is improved.

Figure 2 is a flowchart of a dynamic spectrum sharing method under a scene of intra-LTE without an added spectrum sharing processing network element according to an embodiment of the present invention. This embodiment mainly describes the dynamic spectrum sharing method under the scene of intra-LTE, that is, inside the LTE network. As shown in Figure 2, the embodiment includes steps S21 to S22.

Step S21: an eNB determines second spectrum utilization information of a covered cell, where the second spectrum utilization information includes any one or combinations of the following information: an access failure rate of the covered cell, a calling intensity of the user equipment of the covered cell, an expected bandwidth of the covered cell and a vacating bandwidth of the covered cell.

Step S22: the eNB sends the second spectrum utilization information to the neighboring eNB by an eNB configuration update message or a load information message.

The eNB may send the eNB configuration update message to the neighboring eNB via an X2 interface, when any one of the access failure rate of the covered cell, the calling intensity of the user equipment of the covered cell, the expected bandwidth of the covered cell and the vacating bandwidth of the covered cell are changed. Four IEs, i.e., Access failure rate, Calling intensity, Expected bandwidth and Vacating bandwidth, are newly added in the eNB configuration update message. Alternatively, the eNB may send the load information message to the neighboring eNB via the X2 interface. Four IEs, i.e., Access failure rate, Calling intensity, Expected bandwidth and Vacating bandwidth, are newly added in the load information message.

In the cases where the access failure rate of the covered cell is high, the calling intensity of the user equipment is high, there is expected bandwidth or there is no vacating bandwidth in the eNB, it may be determined that the resource is scarce or the load is heavy in the eNB. When determining that the spectrum resource is scarce in the eNB according to the first spectrum utilization information, the neighboring eNB allocates the vacating bandwidth at the local eNB to the eNB for sending the above-mentioned first spectrum utilization information in the case where there is the vacating spectrum resource in the neighboring eNB at this time. The eNB for sending the first spectrum utilization information may receive the available bandwidth sent by the neighboring eNB. In the case where there is no vacating spectrum resource in the neighboring eNB at this time, the eNB for sending the first spectrum utilization information may receive from the neighboring eNB an inform message that there is no vacating spectrum resource.

Figure 3 is a flowchart of a dynamic spectrum sharing method under a scene of inter-RAT without an added spectrum sharing processing network element according to an embodiment of the present invention. The scene of inter-RAT may be a heterogeneous system that the LTE network coexists with the 3G network, a heterogeneous system that the LTE network coexists with the 2G network, or a heterogeneous wireless network that the 2G network coexists with the 3G network. In the embodiment, the scene of inter-RAT refers specifically to a heterogeneous wireless network that the LTE network coexists with the 2G (or 3G) network. As shown in Figure 3, the embodiment includes the steps 31-33.

Step S31: an eNB determines the expected bandwidth of the covered cell.

Step S32: the eNB sends the expected bandwidth of the covered cell to a core network by an eNB configuration update (ENB CONFIGURATION UPDATE) message in the case of an insufficient bandwidth.

A new IE, i.e., Expected bandwidth, is added in the eNB configuration update message, which is adapted to indicate the expected bandwidth. Under the scene of inter-RAT, no X2 interface is provided between base stations, and thus the base stations can not directly interact with each other. In the heterogeneous radio network that the LTE network coexists with the 2G (or 3G) network, the core network may be a mobility management entity (Mobility Management Entity, MME).

Step S33: the eNB receives an eNB configuration update acknowledge (ENB CONFIGURATION UPDATE ACKNOWLEDGE) message replied by the core network, where the eNB configuration update acknowledge message includes the vacating bandwidth allocated from other eNBs.

The core network determines that the resource is scarce or the load is heavy in the base station for sending the first spectrum utilization information according to the first spectrum utilization information, and determines other base stations having the vacating bandwidth according to the collected first spectrum utilization information of other base stations, and then allocates the vacating bandwidth of other base stations to the base station having the scarce resource. The base station having the scarce resource may receive from the core network the eNB configuration update acknowledge message including the vacating bandwidth. A new IE, i.e., Vacating bandwidth, is added in the eNB configuration update acknowledge message, which is adapted to indicate the vacating bandwidth allocated from other eNBs.

In addition, the eNB may send a bandwidth request (bandwidth request) message to the core network, or send a bandwidth request (bandwidth request) message to a BSC or RNC in the peer network via the core network, in the case of the insufficient bandwidth. The bandwidth request message includes Need adding bandwidth IE adapted to indicate a requested need bandwidth. The eNB receives a bandwidth request acknowledge (bandwidth request ack) message replied by the core network. The bandwidth request acknowledge message includes the vacating bandwidth allocated from other eNBs. The bandwidth request acknowledge message includes Vacating bandwidth IE adapted to indicate the vacating bandwidth allocated from other eNBs.

A BTS or NB sends an eNB configuration update message including the expected bandwidth to the core network via the BSC or RNC to request the expected bandwidth of the covered cell, in the case of the insufficient bandwidth. The spectrum sharing is performed on the core network, after the eNB configuration update message is received. Alternatively, the core network may transmit the eNB configuration update message to the peer network, and then the spectrum sharing is performed on the peer network.

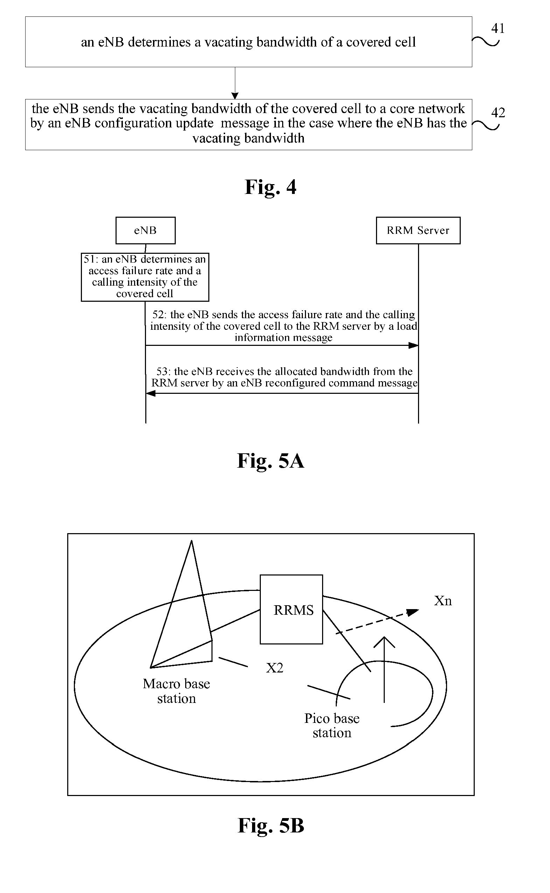

Figure 4 is another flowchart of a dynamic spectrum sharing method under a scene of inter-RAT without an added spectrum sharing processing network element according to an embodiment of the present invention. In this embodiment, the scene of inter-RAT refers specifically to a heterogeneous wireless network that the LTE network coexists with the 2G (or 3G) network. As shown in Figure 4, the embodiment includes steps S41 to S42.

Step S41: an eNB determines a vacating bandwidth of a covered cell.

Step S42: the eNB sends the vacating bandwidth of the covered cell to a core network by an eNB configured update (ENB CONFIGURATION UPDATE) message in the case where the eNB has the vacating bandwidth.

In the 2G network, the BTS sends the eNB configuration update message to the core network via the BSC. In the 3G network, the NB sends the eNB configuration update message to the core network via the RNC.

In the following embodiments, a new network element RRM server is added. In addition, a new interface and a new message are added between the eNB/NB/BTS and the RRM server. The RRM server collects spectrum utilization information of each base station and performs the spectrum sharing. In the systems with the same Radio Access Technology such as the LTE network, the 2G network or the 3G network, the RRM server is located between base stations. In the heterogeneous system that the LTE network coexists with the 3G network, the RRM server is located between the eNB and the RNC. In the heterogeneous system that the LTE network coexists with the 2G network, the RRM server is located between the eNB and the BSC. In the heterogeneous system that the 3G network coexists with the 2G network, the RRM server is located between the BSC and the RNC.

Figure 5A is a flowchart of a dynamic spectrum sharing method under a scene of intra-LTE with an added spectrum sharing processing network element according to an embodiment of the present invention. Figure 5B is an application scene diagram of Figure 5A. As shown in Figure 5A, the dynamic spectrum sharing method according to the embodiment includes steps S51 to S53.

Step S51: an eNB determines an access failure rate and a calling intensity of the covered cell.

Step S52: the eNB sends the access failure rate and the calling intensity of the covered cell to the RRM server by a load information message.

As shown in Figure 5B, the eNB may be a macro base station or a pico base station. The macro base station and the pico base station send the load information message to the RRM server via an added Xn interface.

Step S53: the eNB receives an added bandwidth (Added bandwidth) from the RRM server by an eNB reconfigured command message.

In addition, the eNB may also receive a reducing bandwidth (reducing bandwidth) of the local base station from the RRM server by the eNB reconfigured command message.

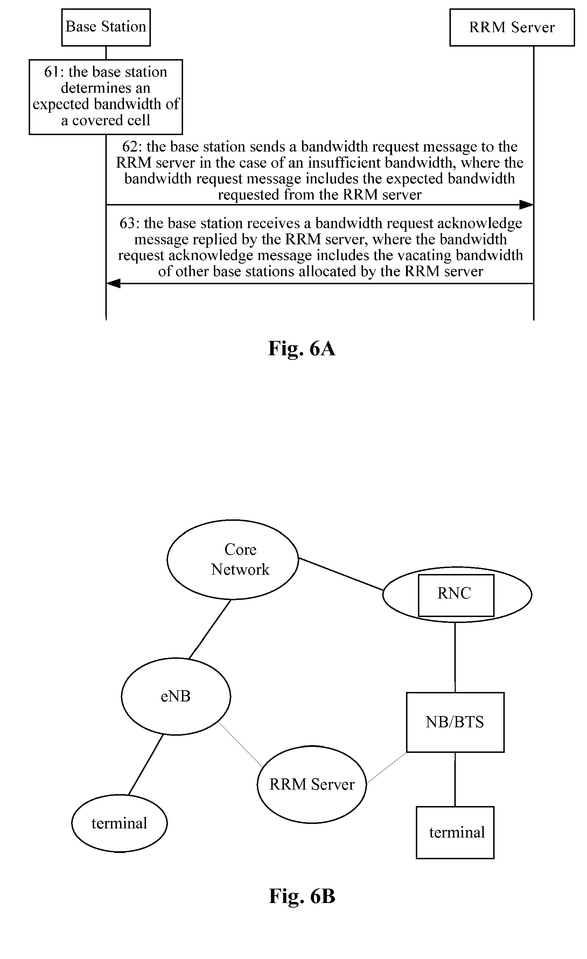

Figure 6A is a flowchart of a dynamic spectrum sharing method under a scene of inter-RAT with an added spectrum sharing processing network element according to an embodiment of the present invention. Figure 6B is an application scene diagram of Figure 6A. The scene shown in Figure 6B is a heterogeneous wireless network that the LTE network coexists with the 3G (or 2G) network. As shown in Figure 6A, in the heterogeneous wireless network that the LTE network coexists with the 3G (or 2G) network, a network element RRM server directly connected to an eNB and NB (or BTS) is added. In this embodiment, a base station may be an eNB in the LTE network, or a NB in the 3G network (or a BTS in the 2G network). As shown in Figure 6A, the dynamic spectrum sharing method according to the embodiment includes steps S61 to S63.

Step S61: the base station determines an expected bandwidth of a covered cell.

Step S62: the base station sends a bandwidth request (bandwidth request) message to the RRM server in the case of an insufficient bandwidth, where the bandwidth request message includes the expected bandwidth requested from the RRM server.

Step S63: the base station receives a bandwidth request acknowledge (bandwidth request ack) message replied by the RRM server, where the bandwidth request acknowledge message includes the vacating bandwidth of other base stations allocated by the RRM server.

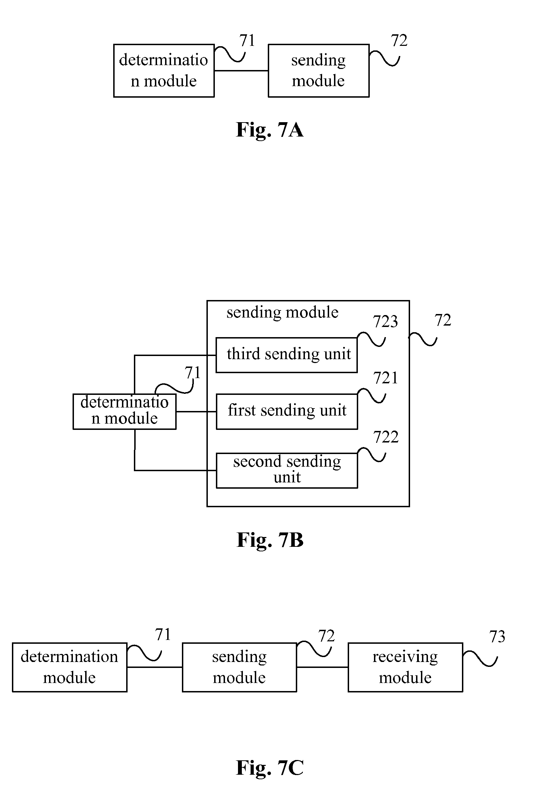

Figure 7A is a schematic structural diagram of a dynamic spectrum sharing device according to an embodiment of the present invention. As shown in Figure 7A, the device according to the embodiment includes a determination module 71 and a sending module 72.

The determination module 71 is adapted to determine first spectrum utilization information of a covered cell, where the first spectrum utilization information includes any one or combinations of the following information: an access failure rate of the covered cell, a calling intensity of the covered cell, an expected bandwidth of the covered cell, a vacating bandwidth of the covered cell, bandwidth configuration information of the covered cell and information of an edge user equipment of the covered cell; the bandwidth configuration information of the covered cell includes a bandwidth and a carrier wave of the covered cell, the information of the edge user equipment of the covered cell includes a downlink transmitting power of the base station and a physical resource block occupied by the edge user equipment of the covered cell.

The sending module 72 is adapted to send the first spectrum utilization information to a neighboring base station in the case where a dynamic spectrum sharing is performed on homogeneous systems with the same radio access technology; or send the first spectrum utilization information to a core network in the case where a dynamic spectrum sharing is performed in heterogeneous systems with different Radio Access Technologies; or send the first spectrum utilization information to a radio resource management server.

As shown in Figure 7B, the sending module 72 includes a first sending unit 721, a second sending unit 722 and a third sending unit 723.

The first sending unit 721 is adapted to send the first spectrum utilization information to the neighboring base station by a configuration update message or a load message, in the case where the dynamic spectrum sharing is performed on a homogeneous system with the same Radio Access Technology.

The second sending unit 722 is adapted to send the first spectrum utilization information to the core network by the configuration update message, in the case where the dynamic spectrum sharing is performed on a heterogeneous system with different radio access technologies.

The third sending unit 723 is adapted to send the first spectrum utilization information to the radio resource management server.

Further, the first sending unit 721 is specifically adapted to send the expected bandwidth to the neighboring base station by the configuration update message or the load message in the case of an insufficient bandwidth of the local base station, or send a vacating bandwidth to the neighboring base station by the configuration update message or the load message in the case where the local base station has the vacating bandwidth, when the dynamic spectrum sharing is performed in the homogeneous system with the same radio access technology.

Further, the second sending unit 722 is specifically adapted to send the expected bandwidth to the core network by the configuration update message in the case of an insufficient bandwidth of the local base station, or send the vacating bandwidth to the core network by the configuration update message in the case where the local base station has the vacating bandwidth, when the dynamic spectrum sharing is performed in the heterogeneous system with different radio access technologies.

Further, the third sending unit 723 is specifically adapted to send the expected bandwidth to the radio resource management server in the case of an insufficient bandwidth of the local base station, or send the vacating bandwidth to the radio resource management server in the case where the local base station has the vacating bandwidth.

As shown in Figure 7C, the device according to the embodiment further may include a receiving module 73.

The receiving module 73 is adapted to, after the first spectrum utilization information is sent by the sending module 72, receive from the neighboring base station the vacating bandwidth of the neighboring base station; receive the vacating bandwidth sent by the core network, where the vacating bandwidth is allocated from a base station having the vacating bandwidth; or receive the vacating bandwidth sent by the radio resource management server, where the vacating bandwidth is allocated from a base station having the vacating bandwidth.

The function of the above-mentioned modules may be described referring to the embodiments corresponding to Figure 1, Figure 2, Figure 3, Figure 4, Figure 5A and Figure 6A, which is not repeated any more herein.

The first spectrum utilization information, which is sent to the neighboring base station or the core network or the RRM server by the dynamic spectrum sharing device according to embodiments of the present invention, includes any one or combinations of the following information: an access failure rate of the covered cell, a calling intensity of the covered cell, an expected bandwidth of the covered cell, a vacating bandwidth of the covered cell, bandwidth configuration information of the covered cell and information of an edge user equipment of the covered cell. The neighboring base station or the core network or the RRM server may determine whether the spectrum resource of the sharing device is scarce or the sharing device has a vacating spectrum resource according to the first spectrum utilization information, and thus the vacating bandwidth of the local base station or other base stations may be allocated to the sharing device or the vacating bandwidth of the sharing device may be allocated to other base stations. Therefore, the spectrum resource sharing is implemented and the utilization rate of spectrum resource is improved.

Those skilled in the art should understand that all or some of the processes for implementing the above-mentioned method of the embodiments can be implemented by instructing related hardware using a computer program which can be stored in a computer readable storage medium. The program may perform the processes including the above-mentioned method according to the embodiments. The above-mentioned storage medium may include ROM, RAM, a magnetic disk, an optical disk and the like which can store program code.

Finally, it should be noted that, the above-mentioned embodiments are only used to illustrate the technical solutions of the present invention, but not to limit it. Although the present invention have been described in detail according to the above-mentioned embodiments, it should be understood to those skilled in the art that the various modifications and equivalent substitutions may be made to the technical solutions recorded in the above-mentioned embodiments, and those modifications and equivalent substitutions do not make the relevant technical solutions departing from the scope of the invention.

## Claims

1. A dynamic spectrum sharing method, comprising:
determining, by a base station, first spectrum utilization information of a covered cell, wherein the first spectrum utilization information comprises any one or combinations of an access failure rate of the covered cell, a calling intensity of the covered cell, an expected bandwidth of the covered cell, a vacating bandwidth of the covered cell, bandwidth configuration information of the covered cell and information of an edge user equipment of the covered cell; the bandwidth configuration information of the covered cell comprises a bandwidth and a carrier wave of the covered cell, the information of the edge user equipment of the covered cell comprises a downlink transmitting power of the base station and a physical resource block occupied by the edge user equipment of the covered cell; and
sending, by the base station, the first spectrum utilization information to a neighboring base station in the case where a dynamic spectrum sharing is performed on a homogeneous system with a same Radio Access Technology; sending, by the base station, the first spectrum utilization information to a core network in the case where a dynamic spectrum sharing is performed on a heterogeneous system with different Radio Access Technologies; or sending, by the base station, the first spectrum utilization information to a radio resource management server.

2. The method according to claim 1, wherein the sending, by the base station, the first spectrum utilization information to a neighboring base station comprises: sending, by the base station, the first spectrum utilization information to the neighboring base station by a configuration update message or a load message; or
the sending, by the base station, the first spectrum utilization information to a core network comprises: sending, by the base station, the first spectrum utilization information to the core network by a configuration update message.

3. The method according to claim 1, wherein the sending, by the base station, the first spectrum utilization information to a neighboring base station comprises:
by the base station, the expected bandwidth to the neighboring base station, in the case of an insufficient bandwidth of the base station; or
sending, by the base station, the vacating bandwidth to the neighboring base station, in the case where the base station has the vacating bandwidth.

4. The method according to claim 1, wherein the sending, by base station, the first spectrum utilization information to a core network comprises:
by the base station, the expected bandwidth to the core network in the case of an insufficient bandwidth of the base station; or
sending, by the base station, the vacating bandwidth to the core network, in the case where the base station has the vacating bandwidth.

5. The method according to claim 1, wherein the sending, by the base station, the first spectrum utilization information to a radio resource management server comprises:
sending, by the base station, the expected bandwidth to the radio resource management server in the case of an insufficient bandwidth of the base station; or
sending, by the base station, the vacating bandwidth to the radio resource management server, in the case where the base station has the vacating bandwidth.

6. The method according to any one of claims 1-5, further comprising:
receiving, by the base station, a vacating bandwidth of the neighboring base station sent by the neighboring base station; receiving, by the base station, the vacating bandwidth sent by the core network, wherein the vacating bandwidth is allocated from a base station having the vacating bandwidth; or receiving, by the base station, the vacating bandwidth sent by the radio resource management server, wherein the vacating bandwidth is allocated from a base station having the vacating bandwidth.

7. A dynamic spectrum sharing device, comprising:
a determination module adapted to determine first spectrum utilization information of a covered cell, wherein the first spectrum utilization information comprises any one or combinations of an access failure rate of the covered cell, a calling intensity of the covered cell, an expected bandwidth of the covered cell, a vacating bandwidth of the covered cell, bandwidth configuration information of the covered cell and information of an edge user equipment of the covered cell; the bandwidth configuration information of the covered cell comprises a bandwidth and a carrier wave of the covered cell, the information of the edge user equipment of the covered cell comprises a downlink transmitting power of the base station and a physical resource block occupied by the edge user equipment of the covered cell; and
a sending module adapted to send the first spectrum utilization information to a neighboring base station in the case where a dynamic spectrum sharing is performed on a homogeneous system with the same Radio Access Technology; send the first spectrum utilization information to a core network in the case where a dynamic spectrum sharing is performed on a heterogeneous system with different Radio Access Technologies; or send the first spectrum utilization information to a radio resource management server.

8. The device according to claim 7, wherein the sending module comprises:
a first sending unit adapted to send the first spectrum utilization information to the neighboring base station by a configuration update message or a load message, in the case where the dynamic spectrum sharing is performed on the homogeneous system with the same Radio Access Technology;
a second sending unit adapted to send the first spectrum utilization information to the core network by a configuration update message, in the case where the dynamic spectrum sharing is performed on a heterogeneous system with different Radio Access Technologies; or
a third sending unit adapted to send the first spectrum utilization information to the radio resource management server.

9. The device according to claim 8, wherein
the first sending unit is further adapted to send the expected bandwidth to the neighboring base station by the configuration update message or the load message, in the case of an insufficient bandwidth of a local base station, or send the vacating bandwidth to the neighboring base station by the configuration update message or the load message in the case where a local base station has the vacating bandwidth, when the dynamic spectrum sharing is performed on the homogeneous system with the same Radio Access Technology;
the second sending unit is further adapted to send the expected bandwidth to the core network by the configuration update message in the case of an insufficient bandwidth of a local base station, or send the vacating bandwidth to the core network by the configuration update message in the case where a local base station has the vacating bandwidth, when the dynamic spectrum sharing is performed on the heterogeneous system with different Radio Access Technologies; and
the third sending unit is further adapted to send the expected bandwidth to the radio resource management server in the case of an insufficient bandwidth of a local base station, or send the vacating bandwidth to the radio resource management server in the case where a local base station has the vacating bandwidth.

10. The device according to any one of claims 7-9, further comprising:
a receiving module adapted to, after the first spectrum utilization information is sent, receive from the neighboring base station the vacating bandwidth of the neighboring base station; receive from the core network the vacating bandwidth allocated from a base station having the vacating bandwidth, or receive from the radio resource management server the vacating bandwidth allocated from a base station having the vacating bandwidth.
